# EUROPEAN PATENT APPLICATION

(11) **EP 4 641 041 A1**
(43) Date of publication of application: **29.10.2025**
(21) Application number: 25164041.3
(22) Date of filing: 17.03.2025
(51) Int. Cl.: F16D 11/14

(54) **VEHICLE DRIVE TRANSMISSION DEVICE**

(30) Priority: 22.04.2024 JP 2024069228
(71) Applicant: Aisin Corporation, Kariya, Aichi 448-8650 (JP)
(72) Inventor: KUBO, Rikiya, Kariya, 448-8650 (JP); KAWAMURA, Akihiro, Kariya, 448-8650 (JP); HATTORI, Yosuke, Kariya, 448-8650 (JP); HANAKI, Yasunori, Kariya, 448-8650 (JP); NAGASE, Rio, Kariya, 448-8650 (JP)
(74) Representative: Kramer Barske Schmidtchen Patentanwälte PartG mbB

(57) **Abstract**

A vehicle drive transmission device (100) includes an input member (1) drivingly coupled to a driving force source (D), an output member (O) drivingly coupled to a wheel (W), and a power transmission mechanism (PT) configured to transmit power between the input member (I) and the output member (O). The power transmission mechanism (PT) includes a first member (1) and a second member (2) disposed coaxially with each other, and a meshing type engagement device (3) configured to perform engagement and engagement release between the first member (1) and the second member (2). A direction along a reference axis (X1) that is an axis on which the first member (1) and the second member (2) are disposed is defined as an axial direction (L). The engagement device (3) includes a first engaged portion (31) provided at the first member (1), a second engaged portion (32) provided at the second member (2), an engagement member (33) rotatable about the reference axis (X1) and configured to change, by moving in the axial direction (L), between a first state in which the engagement member (33) is engaged with both of the first engaged portion (31) and the second engaged portion (32) and a second state in which engagement with at least one of the first engaged portion (31) and the second engaged portion (32) is released, a connection member (34) that is engaged with the engagement member (33) in a state where relative rotation about the reference axis (X1) with respect to the engagement member (33) is allowed and relative movement in the axial direction (L) is restricted, and a drive mechanism (35) configured to move the engagement member (33) in the axial direction (L) via the connection member (34) by driving the connection member (34) in the axial direction (L). A speed sensor (4) configured to detect a rotational speed of the engagement member (33) is attached to the connection member (34) so as to move in the axial direction (L) together with the connection member (34).

## Description

### TECHNICAL FIELD

This disclosure relates to a vehicle drive transmission device that includes an input member drivingly coupled to a driving force source, an output member drivingly coupled to wheels, and a power transmission mechanism configured to transmit power between the input member and the output member.

### BACKGROUND DISCUSSION

An example of such a vehicle drive transmission device is disclosed in JP 10-30714A (Reference 1). In the following description of the background art, reference signs in Reference 1 are cited in parentheses.

The vehicle drive transmission device disclosed in Reference 1 includes a speed sensor (81) configured to detect a rotational speed of a cylindrical clutch drum (41) that supports a drive plate (45a, 55a) from an outer side in a radial direction. The speed sensor (81) detects the rotational speed of the clutch drum (41) by detecting a plurality of claw portions (56b) that are arranged at equal intervals in a circumferential direction so as to protrude to the outer side in the radial direction from an outer peripheral surface of the clutch drum (41).

In the vehicle drive transmission device disclosed in Reference 1, the speed sensor (81) is fixed to a case (2) in which a power transmission mechanism including a multi-stage transmission mechanism (20) and the like is accommodated. With such a configuration, it is possible to detect a rotational speed of a rotary element whose movement in an axial direction is restricted, such as the clutch drum (41), but it is difficult to detect a rotational speed of a rotary element that moves in the axial direction.

In order to appropriately detect the rotational speed of the rotary element that moves in the axial direction, for example, there is a necessity of securing a dimension of a detection object in the axial direction such as the plurality of claw portions (56b) according to a stroke-allowed range of the rotary element in the axial direction such that the detection object faces the speed sensor (81), regardless of a position of the rotary element in the axial direction. However, such a configuration is disadvantageous in that a dimension of the rotary element in the axial direction increases, and a size of the vehicle drive transmission device in the axial direction increases.

A need thus exists for a vehicle drive transmission device that can appropriately detect a rotational speed of a rotary element that moves in an axial direction and can easily reduce a size in the axial dimension.

### SUMMARY

A characteristic configuration of a vehicle drive transmission device made in view of the above includes:
an input member drivingly coupled to a driving force source;
an output member drivingly coupled to a wheel; and
a power transmission mechanism configured to transmit power between the input member and the output member, in which
the power transmission mechanism includes
   a first member and a second member disposed coaxially with each other, and
   a meshing type engagement device configured to perform engagement and engagement release between the first member and the second member,
a direction along a reference axis that is an axis on which the first member and the second member are disposed is defined as an axial direction,
the engagement device includes
   a first engaged portion provided at the first member,
   a second engaged portion provided at the second member,
   an engagement member rotatable about the reference axis and configured to change, by moving in the axial direction, between a first state in which the engagement member is engaged with both of the first engaged portion and the second engaged portion and a second state in which engagement with at least one of the first engaged portion and the second engaged portion is released,
   a connection member that is engaged with the engagement member in a state where relative rotation about the reference axis with respect to the engagement member is allowed and relative movement in the axial direction is restricted, and
   a drive mechanism configured to move the engagement member in the axial direction via the connection member by driving the connection member in the axial direction, and
a speed sensor configured to detect a rotational speed of the engagement member is attached to the connection member so as to move in the axial direction together with the connection member.

According to this characteristic configuration, the speed sensor configured to detect the rotational speed of the engagement member is attached to the connection member that moves in the axial direction together with the engagement member. Accordingly, it is possible to appropriately detect the rotational speed of the engagement member serving as a rotary element that moves in the axial direction.

If a position of the speed sensor in the axial direction is fixed, regardless of a position of the engagement member in the axial direction, there is a necessity of securing a dimension of a detection object in the axial direction according to a stroke-allowed range of the engagement member in the axial direction such that the detection object of the engagement member faces the speed sensor. In such a configuration, a dimension of the engagement member in the axial direction increases, and a size of the vehicle drive transmission device in the axial direction increases. However, according to the present configuration, since there is no the necessity, it is easy to reduce the dimension of the vehicle drive transmission device in the axial direction.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a skeleton diagram of a vehicle drive transmission device according to an embodiment;
FIG. 2 is a partially enlarged cross-sectional view of the vehicle drive transmission device according to the embodiment taken along an axial direction;
FIG. 3 is a partial perspective view of the vehicle drive transmission device according to the embodiment; and
FIG. 4 is a partial perspective view of the vehicle drive transmission device according to the embodiment.

### DETAILED DESCRIPTION

Hereinafter, a vehicle drive transmission device 100 according to an embodiment will be described with reference to the drawings.

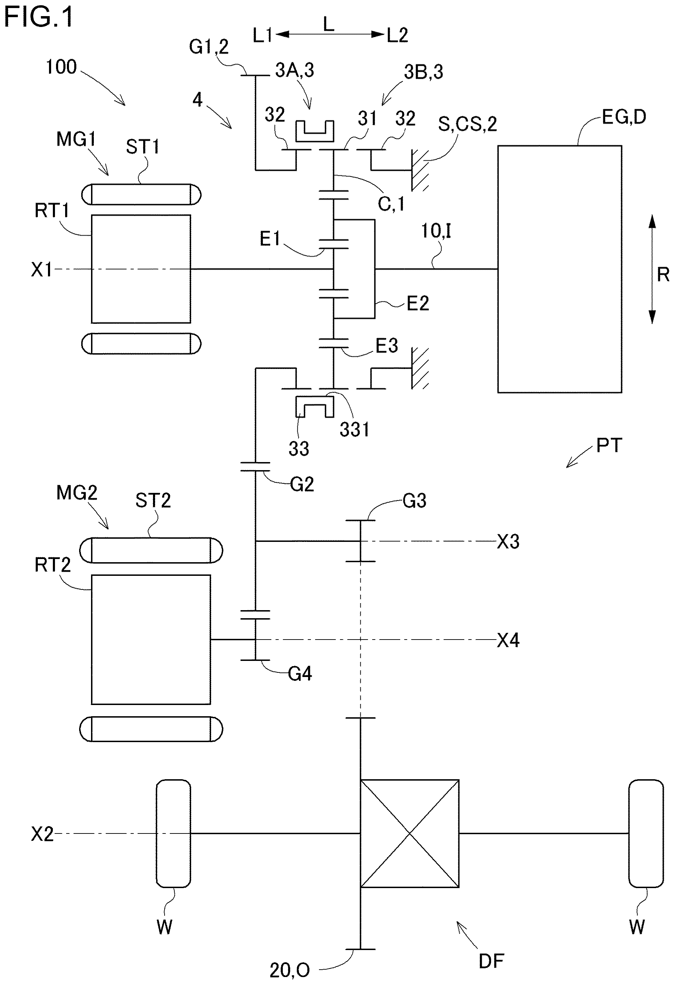

As illustrated in FIG. 1, the vehicle drive transmission device 100 includes an input member I, an output member O, and a power transmission mechanism PT.

The input member I is a member drivingly coupled to a driving force source D. The output member O is a member drivingly coupled to a wheel W.

Here, in the present specification, the term "drivingly coupled" refers to a state in which two rotary elements are coupled such that a driving force can be transmitted, and includes a state in which the two rotary elements are coupled to rotate integrally or a state in which the two rotary elements are coupled such that a driving force can be transmitted via one or two or more transmission members. Examples of such a transmission member include various members that transmit the rotation at the same speed or at variable speeds, such as shafts, gear mechanisms, belts, and chains. Examples of the transmission member may include an engagement device that selectively transmits the rotation and the driving force, such as a friction engagement device and a meshing type engagement device. However, when the term "drivingly coupled" is used for rotary elements of a planetary gear mechanism, the term "drivingly coupled" refers to a state in which the rotary elements are coupled without another rotary element.

In the embodiment, the driving force source D is an internal combustion engine EG. The internal combustion engine EG is a prime mover (a gasoline engine, a diesel engine, or the like) that is driven by combustion of fuel to produce power.

Hereinafter, a direction along a first axis X1 that is a rotation axis of the input member I is referred to as an "axial direction L". Further, one side in the axial direction L is referred to as an "axial direction first side L1", and the other side in the axial direction L is referred to as an "axial direction second side L2". A direction orthogonal to the first axis X1 is referred to as a "radial direction R".

In the embodiment, the input member I is an input shaft 10 formed to extend along the axial direction L.

The power transmission mechanism PT is configured to transmit power between the input member I and the output member O. The power transmission mechanism PT includes a first member 1, a second member 2, and an engagement device 3.

The first member 1 and the second member 2 are disposed coaxially with each other. In the embodiment, the first member 1 and the second member 2 are disposed on the first axis X1. Therefore, in the embodiment, the first axis X1 corresponds to a "reference axis" that is an axis on which the first member 1 and the second member 2 are disposed.

The engagement device 3 is a meshing type engagement device that performs engagement and engagement release between the first member 1 and the second member 2. Therefore, when the first member 1 and the second member 2 are engaged with each other, the first member 1 and the second member 2 are coupled to each other so as to rotate integrally. On the other hand, when the engagement between the first member 1 and the second member 2 is released, the first member 1 and the second member 2 are rotatable relative to each other.

The engagement device 3 includes a first engaged portion 31, a second engaged portion 32, and an engagement member 33.

The first engaged portion 31 is provided at the first member 1. In the embodiment, the first engaged portion 31 is a plurality of splines that extend along the axial direction L and are arranged in a distributed manner in a circumferential direction about the first axis X1.

The second engaged portion 32 is provided at the second member 2. In the embodiment, the second engaged portion 32 is a plurality of splines that extend along the axial direction L and are arranged in a distributed manner in the circumferential direction about the first axis X1.

The engagement member 33 is rotatable about the first axis X1. The engagement member 33 is movable in the axial direction L relative to the first engaged portion 31 and the second engaged portion 32. The engagement member 33 changes between a first state and a second state by moving in the axial direction L. The first state is a state in which the engagement member 33 is engaged with both the first engaged portion 31 and the second engaged portion 32. The second state is a state in which the engagement member 33 is disengaged from at least one of the first engaged portion 31 and the second engaged portion 32.

The engagement member 33 includes an engaging portion 331 that engages with the first engaged portion 31 and the second engaged portion 32. In the embodiment, the engagement member 33 is formed in a cylindrical shape having the first axis X1 as an axis. The engaging portion 331 is provided on an inner peripheral surface of the engagement member 33. In the embodiment, the engaging portion 331 is a plurality of splines that extend along the axial direction L and are arranged in a distributed manner in the circumferential direction about the first axis X1.

In the embodiment, the engagement member 33 is configured to move in the axial direction L while maintaining a state in which the engaging portion 331 is engaged with the first engaged portion 31. That is, in the embodiment, the second state is a state in which the engaging portion 331 is engaged with the first engaged portion 31 and engagement between the engaging portion 331 and the second engaged portion 32 is released.

As illustrated in FIG. 1, in the embodiment, the vehicle drive transmission device 100 further includes an output differential gear mechanism DF and a case CS.

The output differential gear mechanism DF is configured to distribute rotation of the output member O to a pair of wheels W. The output differential gear mechanism DF is disposed on a second axis X2 that is different from the first axis X1. In the embodiment, the output differential gear mechanism DF includes a differential input gear 20. The differential input gear 20 functions as the output member O.

The case CS accommodates the power transmission mechanism PT. In the embodiment, the case CS also accommodates the input member I, the output member O, the output differential gear mechanism DF, and the like.

In the embodiment, the power transmission mechanism PT further includes a cylindrical body C, a first gear G1, a second gear G2, a third gear G3, a fourth gear G4, and a distribution differential gear mechanism SP.

The cylindrical body C is formed in a cylindrical shape having the first axis X1 as an axis. The first gear G1 is disposed on the first axis X1.

In the embodiment, the first engaged portion 31 is formed on an outer peripheral surface of the cylindrical body C. That is, in the embodiment, the cylindrical body C corresponds to the first member 1. In the embodiment, the first gear G1 is disposed adjacent to the cylindrical body C on the axial direction first side L1. At the first gear G1, the second engaged portion 32 is provided. In the embodiment, the case CS includes a sidewall portion S adjacent to the cylindrical body C on the axial direction first side L1. At the sidewall portion S, the second engaged portion 32 is provided. That is, in the embodiment, each of the first gear G1 and the sidewall portion S corresponds to the second member 2.

As described above, in the embodiment, the second member 2, the first member 1, and the second member 2 are arranged side by side in the axial direction L in this order. That is, in the embodiment, the power transmission mechanism PT includes one first member 1 and two second members 2.

In the embodiment, the second engaged portion 32, the first engaged portion 31, and the second engaged portion 32 are arranged side by side in the axial direction L in this order. That is, in the embodiment, in the power transmission mechanism PT, a pair of engagement devices 3 are arranged side by side in the axial direction L. The pair of engagement devices 3 share the first engaged portion 31 and the engagement member 33. In the following description, of the pair of engagement devices 3, one disposed on the axial direction first side L1 is referred to as a first engagement device 3A, and one disposed on the axial direction second side L2 is referred to as a second engagement device 3B.

The second gear G2 is disposed on a third axis X3 that is different from the first axis X1 and the second axis X2. The second gear G2 meshes with the first gear G1.

The third gear G3 is disposed on the third axis X3. The third gear G3 is coupled so as to rotate integrally with the second gear G2. The third gear G3 meshes with the differential input gear 20. In the embodiment, the third gear G3 has a smaller diameter than the second gear G2. The third gear G3 is disposed on the axial direction second side L2 with respect to the second gear G2.

The fourth gear G4 is disposed on a fourth axis X4 that is different from the first axis X1, the second axis X2, and the third axis X3. The fourth gear G4 meshes with the second gear G2. The fourth gear G4 is drivingly coupled to a second rotary electric machine MG2.

The distribution differential gear mechanism SP includes a first rotary element E1, a second rotary element E2, and a third rotary element E3. An order of rotational speeds of these rotary elements is the first rotary element E1, the second rotary element E2, and the third rotary element E3. Here, the "order of the rotational speeds" is the order of the rotational speeds of the rotary elements in the rotation state. The rotational speed of each rotary element changes depending on the state of the differential gear mechanism, but an ascending or descending order of the rotational speeds of the rotary elements is determined by the structure of the differential gear mechanism and thus is fixed.

The first rotary element E1 is drivingly coupled to a first rotary electric machine MG1. The second rotary element E2 is drivingly coupled to the input member I. The third rotary element E3 is drivingly coupled to the output member O via the power transmission mechanism PT.

In the embodiment, the distribution differential gear mechanism SP is implemented as a planetary gear mechanism. The first rotary element E1, the second rotary element E2, and the third rotary element E3 are a sun gear, a carrier, and a ring gear, respectively. In the embodiment, the second rotary element E2 serving as a carrier supports a pinion gear that meshes with both the first rotary element E1 serving as a sun gear and the third rotary element E3 serving as a ring gear. That is, in the embodiment, the distribution differential gear mechanism SP is implemented as a single-pinion planetary gear mechanism.

Each of the first rotary electric machine MG1 and the second rotary electric machine MG2 has a function as a motor (electric motor) that receives electric power and generates power and a function as a generator (electric generator) that receives power and generates electric power. The first rotary electric machine MG1 and the second rotary electric machine MG2 are accommodated in the case CS.

The first rotary electric machine MG1 includes a first stator ST1 and a first rotor RT1. The first stator ST1 is fixed to a non-rotary member (here, the case CS). The first rotor RT1 is rotatably supported with respect to the first stator ST1. In the embodiment, the first rotor RT1 is coupled so as to rotate integrally with the first rotary element E1 serving as the sun gear.

The second rotary electric machine MG2 includes a second stator ST2 and a second rotor RT2. The second stator ST2 is fixed to a non-rotary member (here, the case CS). The second rotor RT2 is rotatably supported with respect to the second stator ST2. In the embodiment, the second rotor RT2 is coupled so as to rotate integrally with the fourth gear G4.

In the embodiment, when the engagement member 33 is in the first state in the first engagement device 3A, the engagement member 33 is in the second state in the second engagement device 3B. That is, when the engaging portion 331 of the engagement member 33 is engaged with both the first engaged portion 31 and the second engaged portion 32 constituting the first engagement device 3A, the engagement between the engaging portion 331 and the second engaged portion 32 constituting the second engagement device 3B is released. At this time, the third rotary element E3 of the distribution differential gear mechanism SP and the first gear G1 are coupled so as to rotate integrally. As a result, a driving force of the internal combustion engine EG is transmitted to the first rotary electric machine MG1 by the distribution differential gear mechanism SP, and is transmitted to the output member O via the first gear G1, the second gear G2, and the third gear G3. A driving force of the second rotary electric machine MG2 is transmitted to the output member O via the fourth gear G4, the second gear G2, and the third gear G3.

On the other hand, when the engagement member 33 is in the first state in the second engagement device 3B, the engagement member 33 is in the second state in the first engagement device 3A. That is, when the engaging portion 331 of the engagement member 33 is engaged with both the first engaged portion 31 and the second engaged portion 32 constituting the second engagement device 3B, the engagement between the engaging portion 331 and the second engaged portion 32 constituting the first engagement device 3A is released. At this time, power transmission between the third rotary element E3 of the distribution differential gear mechanism SP and the first gear G1 is cut off, and the third rotary element E3 is fixed to the case CS. As a result, the driving force of the internal combustion engine EG is transmitted to the first rotary electric machine MG1 via the distribution differential gear mechanism SP without being transmitted to the output member O, and the first rotary electric machine MG1 generates electric power by the driving force. The driving force of the second rotary electric machine MG2 is transmitted to the output member O via the fourth gear G4, the second gear G2, and the third gear G3.

In the embodiment, the state of the engagement member 33 can be changed to the second state in both the first engagement device 3A and the second engagement device 3B. That is, the engagement member 33 is configured such that the engagement between the engaging portion 331 and both the second engaged portion 32 constituting the first engagement device 3A and the second engaged portion 32 constituting the second engagement device 3B is released.

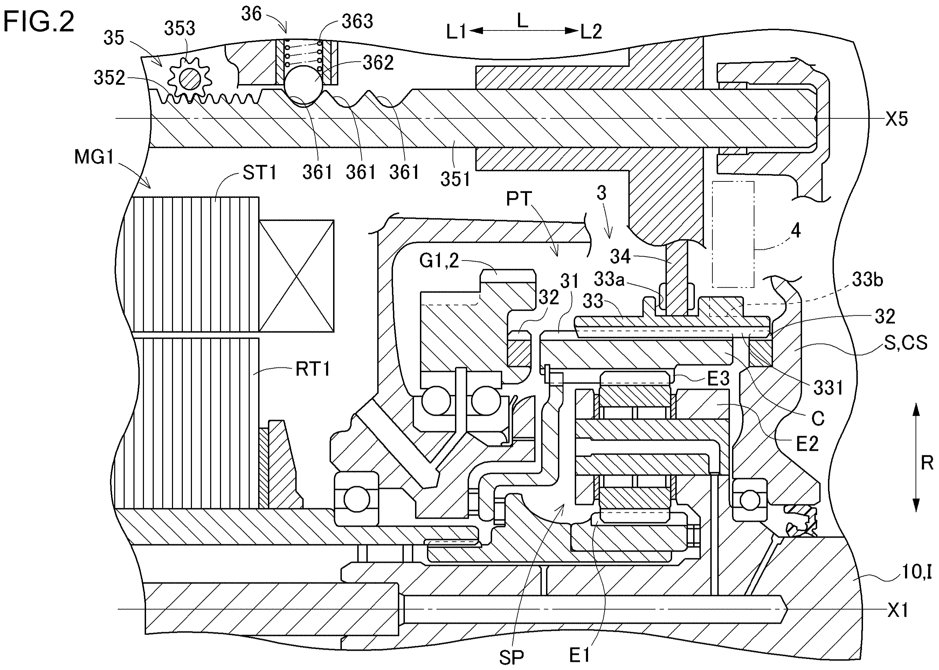

As illustrated in FIG. 2, the engagement device 3 includes a connection member 34 and a drive mechanism 35.

The connection member 34 is engaged with the engagement member 33 in a state where relative rotation about the first axis X1 with respect to the engagement member 33 is allowed and relative movement in the axial direction L is restricted. More specifically, the connection member 34 is not rotated about the first axis X1, but the engagement member 33 is rotated about the first axis X1. The connection member 34 is formed to extend along the radial direction R. In the embodiment, on an outer peripheral surface of the engagement member 33, a holding groove 33a recessed inward in the radial direction R is formed continuously along the circumferential direction about the first axis X1. An end portion of the connection member 34 on an inner side in the radial direction R is formed in a circular arc shape along the holding groove 33a and is disposed in the holding groove 33a.

The drive mechanism 35 is configured to move the engagement member 33 in the axial direction L via the connection member 34 by driving the connection member 34 in the axial direction L. In the embodiment, the drive mechanism 35 includes a transmission shaft 351, a rack gear 352, and a pinion gear 353.

The transmission shaft 351 is formed to extend along the axial direction L. The transmission shaft 351 is supported movably in the axial direction L with respect to the case CS. The transmission shaft 351 is coupled so as to move integrally with the connection member 34. The transmission shaft 351 is disposed on a fifth axis X5 different from the first axis X1 to the fourth axis X4. In the embodiment, the first axis X1, the second axis X2, the third axis X3, the fourth axis X4, and the fifth axis X5 are parallel to each other.

The rack gear 352 is formed on the transmission shaft 351 along the axial direction L. In the embodiment, the rack gear 352 is disposed on the axial direction first side L1 with respect to a coupling portion of the transmission shaft 351 with the connection member 34.

The pinion gear 353 meshes with the rack gear 352 in a state where a rotation axis thereof is orthogonal to the fifth axis X5. The pinion gear 353 is configured to be rotated by a driving force from a driving source (not illustrated) such as an electric motor. As the pinion gear 353 rotates, the transmission shaft 351 on which the rack gear 352 meshing with the pinion gear 353 is formed moves in the axial direction L. As a result, the engagement member 33 moves in the axial direction L via the connection member 34 coupled to the transmission shaft 351.

In the embodiment, the engagement device 3 further includes a detent mechanism 36. The detent mechanism 36 is configured to maintain a position of the engagement member 33 in the axial direction L. The detent mechanism 36 includes a detent groove 361, a spherical body 362, and a biasing member 363.

The detent groove 361 is formed to be recessed from an outer peripheral surface of the transmission shaft 351 toward the fifth axis X5. The spherical body 362 is formed to fit into the detent groove 361. The biasing member 363 biases the spherical body 362 toward the fifth axis X5. In the embodiment, the biasing member 363 is a compression coil spring.

In the embodiment, the detent groove 361 is provided adjacent to the rack gear 352 on the axial direction second side L2. In the embodiment, three detent grooves 361 are provided side by side in the axial direction L so as to correspond to the state of the engagement device 3 as described below.

When the engagement member 33 is in the first state in the first engagement device 3A and the engagement member 33 is in the second state in the second engagement device 3B, that is, when the engaging portion 331 of the engagement member 33 is engaged with both the first engaged portion 31 and the second engaged portion 32 constituting the first engagement device 3A and the engagement between the engaging portion 331 and the second engaged portion 32 constituting the second engagement device 3B is released, the spherical body 362 is fitted in the detent groove 361 on the axial direction second side L2.

When the engagement member 33 is in the second state in the first engagement device 3A and the engagement member 33 is in the first state in the second engagement device 3B, that is, when the engaging portion 331 of the engagement member 33 is engaged with both the first engaged portion 31 and the second engaged portion 32 constituting the second engagement device 3B and the engagement between the engaging portion 331 and the second engaged portion 32 constituting the first engagement device 3A is released, the spherical body 362 is fitted in the detent groove 361 on the axial direction first side L1 (the state illustrated in FIG. 2).

When the engagement member 33 is in the second state in both the first engagement device 3A and the second engagement device 3B, that is, when the engagement between the engaging portion 331 of the engagement member 33 and both the second engaged portion 32 constituting the first engagement device 3A and the second engaged portion 32 constituting the second engagement device 3B is released, the spherical body 362 is fitted in the detent groove 361 at the center in the axial direction L.

The detent groove 361 has a shape that allows the spherical body 362 to move relatively between the three detent grooves 361 when the state of the engagement member 33 changes. In the embodiment, the detent groove 361 is formed in a V shape in a cross-sectional view along the fifth axis X5.

In the following description, a direction orthogonal to the axial direction L is referred to as an "axis-orthogonal direction P". One side in the axis-orthogonal direction P is referred to as an "axis-orthogonal direction first side P1", and the other side in the axis-orthogonal direction P is referred to as an "axis-orthogonal direction second side P2". In the embodiment, the axis-orthogonal direction P is a direction along a horizontal direction. In the embodiment, a side close to the first axis X1 in the axis-orthogonal direction P is the axis-orthogonal direction first side P1, and a side opposite to the first axis X1 is the axis-orthogonal direction second side P2.

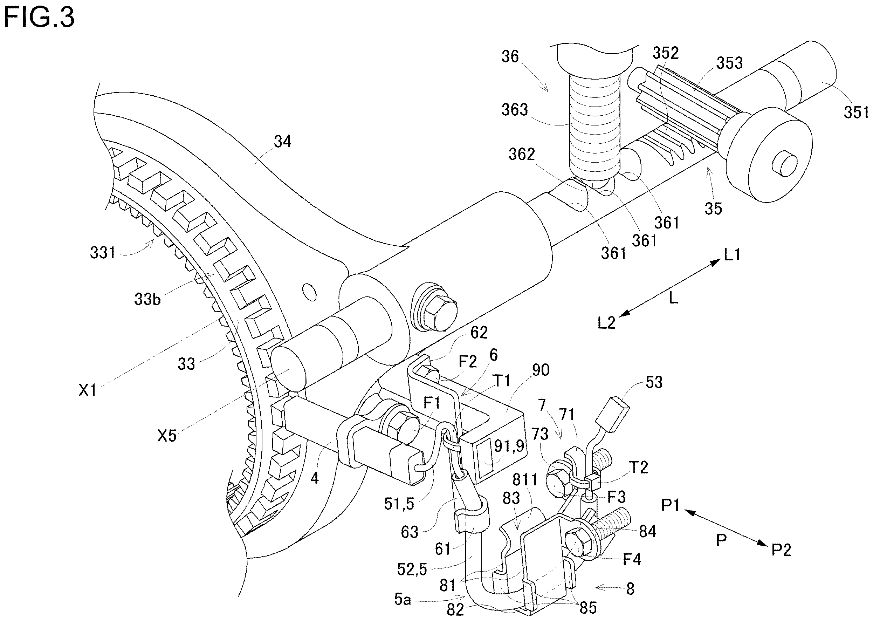

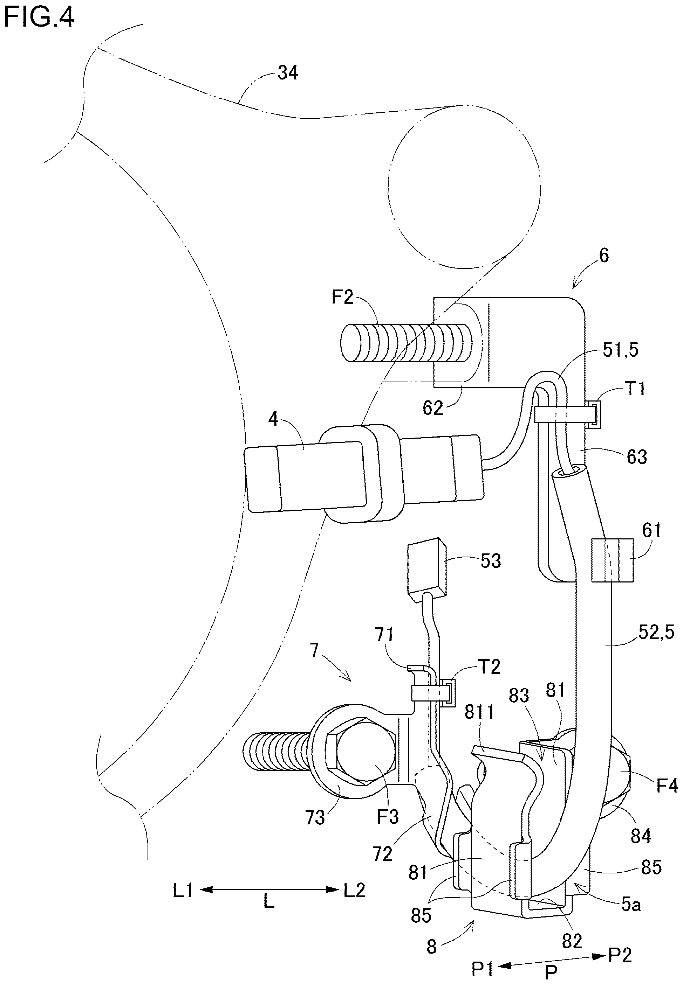

As illustrated in FIGS. 3 and 4, the vehicle drive transmission device 100 includes a speed sensor 4. The speed sensor 4 is a sensor that detects the rotational speed of the engagement member 33. In the embodiment, the speed sensor 4 is used to synchronize the rotation of the cylindrical body C that rotates integrally with the engagement member 33 and the rotation of the first gear G1, and engage the engaging portion 331 that is engaged with the first engaged portion 31 provided at the cylindrical body C with the second engaged portion 32 provided at the first gear G1.

The speed sensor 4 is attached to the connection member 34 so as to move in the axial direction L together with the connection member 34. In the embodiment, the speed sensor 4 is fixed to the connection member 34 from the axis-orthogonal direction second side P2 by a first fastening member F1 such as a bolt.

In the embodiment, an uneven portion 33b having an uneven shape is formed on the outer peripheral surface of the engagement member 33 along the circumferential direction of the outer peripheral surface (see also FIG. 2). The speed sensor 4 is disposed to face the uneven portion 33b from the outer side in the radial direction R. Thus, in the embodiment, the uneven portion 33b functions as a detection object of the speed sensor 4.

In the embodiment, the vehicle drive transmission device 100 further includes a signal wire 5, a support member 6, a fixing member 7, a holding member 8, and a position sensor 9.

The signal wire 5 extends from the speed sensor 4. In the embodiment, the signal wire 5 extends from the speed sensor 4 to the axis-orthogonal direction second side P2. In the embodiment, the signal wire 5 includes an electric wire 51 and a protective member 52.

The electric wire 51 is a wire for connecting the speed sensor 4 and a control device (not illustrated). In the embodiment, the electric wire 51 includes a conductor and a covering material that covers the conductor. A connector 53 is provided at an end portion of the electric wire 51 opposite to the speed sensor 4.

The protective member 52 is a member for protecting the electric wire 51. The protective member 52 is preferably a member having flexibility. In the embodiment, the protective member 52 is a spiral tube. The protective member 52 is disposed so as to cover a partial region of the electric wire 51 between the speed sensor 4 and the connector 53.

The support member 6 is a member that supports the signal wire 5. In the embodiment, the support member 6 includes a gripping portion 61, an attachment portion 62, and a coupling portion 63.

The gripping portion 61 is formed to grip the signal wire 5. In the embodiment, the gripping portion 61 is formed to cover the signal wire 5 from the axial direction first side L1, the axial direction second side L2, and the axis-orthogonal direction second side P2. The gripping portion 61 grips the protective member 52 such that an end portion of the protective member 52 on the speed sensor 4 side faces upward. In the embodiment, the gripping portion 61 is disposed on the axis-orthogonal direction second side P2 and a lower side of the speed sensor 4.

The attachment portion 62 is attached to the connection member 34. In the embodiment, the attachment portion 62 is disposed on an upper side of the gripping portion 61. The attachment portion 62 is fixed to the connection member 34 from the axis-orthogonal direction second side P2 by a second fastening member F2 such as a bolt.

The coupling portion 63 is formed to couple the gripping portion 61 and the attachment portion 62. In the embodiment, the coupling portion 63 is formed to extend along a vertical direction. The coupling portion 63 is disposed so as to come into contact with a portion of the electric wire 51 that extends from the protective member 52 toward the speed sensor 4. In a state where the portion of the electric wire 51 in contact with the coupling portion 63 extends along the vertical direction, the portion is fastened to the coupling portion 63 by a first fastening member T1 such as a binding band.

The fixing member 7 is a member that fixes the signal wire 5 to the case CS. The fixing member 7 is disposed apart from the speed sensor 4. In other words, the fixing member 7 is disposed at a position closer to the connector 53 than the speed sensor 4. In the embodiment, the fixing member 7 includes a fastening portion 71, a support portion 72, and a first fixing portion 73.

The fastening portion 71 is configured such that the signal wire 5 is fastened by a second fastening member T2 such as a binding band. In the embodiment, the fastening portion 71 is formed to extend along the vertical direction. Further, the fastening portion 71 is disposed to come into contact with a portion of the electric wire 51, which extends from the protective member 52 toward the connector 53, from the axis-orthogonal direction first side P1. In a state where the portion of the electric wire 51 in contact with the fastening portion 71 extends along the vertical direction, the portion is fastened to the fastening portion 71 by the second fastening member T2 such as a binding band.

The support portion 72 is formed to support the signal wire 5. In the embodiment, the support portion 72 extends from the fastening portion 71 to the axial direction second side L2, and is formed to cover the signal wire 5 from the axis-orthogonal direction first side P1, the axis-orthogonal direction second side P2, and the lower side. The support portion 72 supports the protective member 52 such that an end portion of the protective member 52 on the connector 53 side faces upward.

The first fixing portion 73 is coupled to the case CS. In the embodiment, the first fixing portion 73 is formed to extend from the fastening portion 71 to the axis-orthogonal direction first side P1. The first fixing portion 73 is fixed to the case CS by a third fastening member F3 such as a bolt.

In the embodiment, the signal wire 5 includes a curved portion 5a. The curved portion 5a is a portion of the signal wire 5 curved between the speed sensor 4 and the fixing member 7.

In the embodiment, the fixing member 7 is disposed on the axial direction first side L1 with respect to the support member 6. Here, as described above, the gripping portion 61 of the support member 6 grips the protective member 52 such that the end portion of the protective member 52 on the speed sensor 4 side faces upward. The support portion 72 of the fixing member 7 supports the protective member 52 such that the end portion of the protective member 52 on the connector 53 side faces upward. Therefore, in the embodiment, the signal wire 5 is supported by the support member 6 and the fixing member 7 so as to have a U shape when viewed in the axis-orthogonal direction along the axis-orthogonal direction P. Therefore, in the embodiment, the curved portion 5a is formed between the gripping portion 61 and the support portion 72.

The holding member 8 is a member that holds the signal wire 5. In the embodiment, the holding member 8 is disposed between the fixing member 7 and the support member 6 in the axial direction L. That is, in the embodiment, the fixing member 7, the holding member 8, and the support member 6 are disposed in this order from the axial direction first side L1 toward the axial direction second side L2. The holding member 8 is disposed on the lower side of the support member 6 and the fixing member 7.

In the embodiment, the holding member 8 includes a pair of guide walls 81, a coupling wall 82, an opening 83, and a second fixing portion 84.

The pair of guide walls 81 are disposed so as to sandwich the curved portion 5a from both sides in a direction orthogonal to the axial direction L. In the embodiment, the pair of guide walls 81 are disposed so as to sandwich the curved portion 5a from the axis-orthogonal direction first side P1 and the axis-orthogonal direction second side P2. Each of the pair of guide walls 81 is formed in a plate shape extending in the axial direction L and the vertical direction.

The coupling wall 82 is formed to couple the pair of guide walls 81 to each other. In the embodiment, the coupling wall 82 is formed in a plate shape extending in the axis-orthogonal direction P and the axial direction L. The coupling wall 82 is formed so as to couple lower end portions of the pair of guide walls 81 to each other.

The opening 83 is formed between the pair of guide walls 81 so as to open on a side opposite to the coupling wall 82. In the embodiment, the opening 83 opens upward. In the embodiment, a space between the pair of guide walls 81 and above the coupling wall 82 corresponds to the opening 83.

As described above, in the embodiment, the holding member 8 is formed to have a U-shaped cross section orthogonal to the axial direction L.

The second fixing portion 84 is coupled to the case CS. In the embodiment, the second fixing portion 84 is formed to extend from the guide wall 81 on the axis-orthogonal direction second side P2 to the axis-orthogonal direction second side P2. The second fixing portion 84 is fixed to the case CS by a fourth fastening member F4 such as a bolt.

In the embodiment, at least one of the pair of guide walls 81 includes a deformable portion 811. In the illustrated example, the guide wall 81 on the axis-orthogonal direction first side P1 includes the deformable portion 811.

The deformable portion 811 is configured to be elastically deformable from a state where a width of the opening 83 is smaller than a diameter of the signal wire 5 to a state where the width of the opening 83 is equal to or larger than the diameter of the signal wire 5. Here, the "width of the opening 83" is a shortest distance between the deformable portion 811 and the guide wall 81 facing the deformable portion 811.

In the embodiment, the deformable portion 811 is curved so as to protrude further to the axis-orthogonal direction second side P2 with respect to a portion of the guide wall 81 on the axis-orthogonal direction first side P1 where the deformable portion 811 is not formed.

In the embodiment, in a state where no external force is applied to the deformable portion 811 (a natural state), a dimension in the axis-orthogonal direction P between an end portion of the deformable portion 811 on the axis-orthogonal direction second side P2 and the guide wall 81 on the axis-orthogonal direction second side P2 is smaller than a diameter of the protective member 52 of the signal wire 5. When an external force toward the axis-orthogonal direction first side P1 is applied to the deformable portion 811, the deformable portion 811 can be deformed such that the dimension in the axis-orthogonal direction P between the end portion of the deformable portion 811 on the axis-orthogonal direction second side P2 and the guide wall 81 on the axis-orthogonal direction second side P2 is equal to or larger than the diameter of the protective member 52 of the signal wire 5. As described above, in the embodiment, the dimension in the axis-orthogonal direction P between the end portion of the deformable portion 811 on the axis-orthogonal direction second side P2 and the guide wall 81 on the axis-orthogonal direction second side P2 corresponds to the "width of the opening 83".

In the embodiment, the holding member 8 further includes lip portions 85 formed by curving or bending end portions on both sides in the axial direction L of each of the pair of guide walls 81. The lip portion 85 disposed on one of the pair of guide walls 81 and the lip portion 85 disposed on the other of the pair of guide walls 81 are formed to be separated from each other.

In the embodiment, the guide wall 81 on the axis-orthogonal direction first side P1 is provided with the lip portion 85 formed by curving or bending the end portion of the guide wall 81 on the axial direction first side L1 to the axis-orthogonal direction first side P1, and the lip portion 85 formed by curving or bending the end portion of the guide wall 81 on the axial direction second side L2 to the axis-orthogonal direction first side P1. The guide wall 81 on the axis-orthogonal direction second side P2 is provided with the lip portion 85 formed by curving or bending the end portion of the guide wall 81 on the axial direction first side L1 to the axis-orthogonal direction second side P2, and the lip portion 85 formed by curving or bending the end portion of the guide wall 81 on the axial direction second side L2 to the axis-orthogonal direction second side P2.

As illustrated in FIG. 3, the position sensor 9 is a sensor that detects the position of the engagement member 33 in the axial direction L. In the embodiment, the position sensor 9 includes a detected portion 91 and a detection unit (not illustrated). The detected portion 91 is configured to move in the axial direction L together with the connection member 34. The detection unit is fixed to the case CS.

In the embodiment, the detected portion 91 is supported by a bracket 90. The bracket 90 is attached to the connection member 34 so as to move in the axial direction L together with the connection member 34. In the embodiment, the bracket 90 includes a first portion extending from the connection member 34 to the axis-orthogonal direction second side P2, and a second portion extending from an end of the first portion on the axis-orthogonal direction second side P2 to the axial direction second side L2. The detected portion 91 is fixed to a surface of the second portion of the bracket 90 facing the axis-orthogonal direction second side P2. The detection unit of the position sensor 9 is disposed at a position facing the detected portion 91 from the axial direction second side L2.

In the embodiment, the position sensor 9 is implemented as a magnetic sensor that detects, by the detection unit, a change in magnetic flux density accompanying movement of the detected portion 91, which is a magnet, in the axial direction L.

In the embodiment, as the engagement member 33 moves in the axial direction L, a distance in the axial direction L between the portion of the signal wire 5 gripped by the gripping portion 61 of the support member 6 and the portion of the signal wire 5 supported by the support portion 72 of the fixing member 7 changes. As a result, the curved portion 5a moves up and down between the pair of guide walls 81 while changing its shape. At this time, the curved portion 5a is restricted from moving downward by the coupling wall 82 while being restricted from moving in the axis-orthogonal direction P by the pair of guide walls 81, and is restricted from moving upward by the deformable portion 811 and the guide wall 81 on the axis-orthogonal direction second side P2.

The lip portion 85 is preferably disposed in a region in the vertical direction corresponding to the vertical movement of the curved portion 5a accompanying the movement of the engagement member 33 in the axial direction L. In the embodiment, the lip portion 85 is disposed between the deformable portion 811 and the coupling wall 82 in the vertical direction.

### Other Embodiments

(1) In the above embodiment, the configuration in which the axis-orthogonal direction P orthogonal to the axial direction L is a direction along the horizontal direction is described as an example. However, this disclosure is not limited to such a configuration, and the axis-orthogonal direction P may be a direction inclined with respect to the horizontal direction.
(2) In the above embodiment, the configuration in which the driving force source D is the internal combustion engine EG is described as an example. However, this disclosure is not limited to such a configuration, and a configuration in which the driving force source D is a rotary electric machine may be adopted.
(3) In the above embodiment, the configuration in which the first rotary electric machine MG1 and the second rotary electric machine MG2 are accommodated in the case CS and the driving forces of the first rotary electric machine MG1 and the second rotary electric machine MG2 are used is described as an example. However, this disclosure is not limited to such a configuration, and a configuration in which the driving force of one or both of the first rotary electric machine MG1 and the second rotary electric machine MG2 is not used may be adopted.
(4) In the above embodiment, the configuration in which the power transmission mechanism PT includes the first gear G1, the second gear G2, the third gear G3, the fourth gear G4, and the distribution differential gear mechanism SP is described as an example. However, this disclosure is not limited to such a configuration, and for example, a configuration in which another gear is provided instead of the first gear G1, the second gear G2, the third gear G3, and the fourth gear G4 may be adopted. Further, a configuration in which the distribution differential gear mechanism SP is not provided may be adopted.
(5) In the above embodiment, a configuration is described as an example in which the distribution differential gear mechanism SP is implemented as a single-pinion planetary gear mechanism, and the first rotary element E1, the second rotary element E2, and the third rotary element E3 are a sun gear, a carrier, and a ring gear, respectively. However, this disclosure is not limited to such a configuration, and for example, a configuration in which the distribution differential gear mechanism SP is implemented as a double-pinion planetary gear mechanism may be adopted. In this configuration, the first rotary element E1, the second rotary element E2, and the third rotary element E3 are preferably a sun gear, a ring gear, and a carrier, respectively.
(6) The configurations disclosed in the embodiments described above can be applied in combination with configurations disclosed in other embodiments as long as no contradiction occurs. Regarding other configurations, the embodiments disclosed in the present specification are merely an example in all respects. Therefore, various modifications can be made as appropriate without departing from the spirit of this disclosure.

### Summary of Embodiments

Hereinafter, an outline of a vehicle drive transmission device (100) described above will be described.

A vehicle drive transmission device (100) including:
an input member (I) drivingly coupled to a driving force source (D);
an output member (O) drivingly coupled to a wheel (W); and
a power transmission mechanism (PT) configured to transmit power between the input member (I) and the output member (O), in which
the power transmission mechanism (PT) includes
   a first member (1) and a second member (2) disposed coaxially with each other, and
   a meshing type engagement device (3) configured to perform engagement and engagement release between the first member (1) and the second member (2),
a direction along a reference axis (X1) that is an axis on which the first member (1) and the second member (2) are disposed is defined as an axial direction (L),
the engagement device (3) includes
   a first engaged portion (31) provided at the first member (1),
   a second engaged portion (32) provided at the second member (2),
   an engagement member (33) rotatable about the reference axis (X1) and configured to change, by moving in the axial direction (L), between a first state in which the engagement member (33) is engaged with both of the first engaged portion (31) and the second engaged portion (32) and a second state in which engagement with at least one of the first engaged portion (31) and the second engaged portion (32) is released,
   a connection member (34) that is engaged with the engagement member (33) in a state where relative rotation about the reference axis (X1) with respect to the engagement member (33) is allowed and relative movement in the axial direction (L) is restricted, and
   a drive mechanism (35) configured to move the engagement member (33) in the axial direction (L) via the connection member (34) by driving the connection member (34) in the axial direction (L), and
a speed sensor (4) configured to detect a rotational speed of the engagement member (33) is attached to the connection member (34) so as to move in the axial direction (L) together with the connection member (34).

According to this configuration, the speed sensor (4) configured to detect the rotational speed of the engagement member (33) is attached to the connection member (34) that moves in the axial direction (L) together with the engagement member (33). Accordingly, it is possible to appropriately detect the rotational speed of the engagement member (33) serving as a rotary element that moves in the axial direction (L).

If a position of the speed sensor (4) in the axial direction (L) is fixed, regardless of a position of the engagement member (33) in the axial direction (L), there is a necessity of securing a dimension of a detection object in the axial direction (L) according to a stroke-allowed range of the engagement member (33) in the axial direction (L) such that the detection object of the engagement member (33) faces the speed sensor (4). In such a configuration, a dimension of the engagement member (33) in the axial direction (L) increases, and a size of the vehicle drive transmission device (100) in the axial direction (L) increases. However, according to the present configuration, since there is no the necessity, it is easy to reduce a dimension of the vehicle drive transmission device (100) in the axial direction (L).

Here, the vehicle drive transmission device (100) preferably further includes:
a case (CS) accommodating the power transmission mechanism (PT);
a signal wire (5) extending from the speed sensor (4); and
a fixing member (7) disposed apart from the speed sensor (4) and configured to fix the signal wire (5) to the case (CS).

Here, the vehicle drive transmission device (100) preferably further includes:
a holding member (8) configured to hold the signal wire (5), in which
the signal wire (5) includes a curved portion (5a) that is curved between the speed sensor (4) and the fixing member (7), and
the holding member (8) includes a pair of guide walls (81) disposed so as to sandwich the curved portion (5a) from both sides in a direction (P) orthogonal to the axial direction (L).

According to this configuration, even when the speed sensor (4) moves in the axial direction (L) as the engagement member (33) and the connection member (34) move in the axial direction (L) due to a state change of the engagement device (3), it is possible to restrict the signal wire (5) from moving to an unintended place and interfering with a peripheral member. Further, it is possible to make it difficult for a load due to deformation of the signal wire (5) to act on the signal wire (5). Therefore, it is possible to make it difficult for defects such as disconnection of the signal wire (5) to occur.

In the above configuration,
the holding member (8) preferably further includes a coupling wall (82) coupling the pair of guide walls (81) to each other, and an opening (83) formed between the pair of guide walls (81) so as to open on a side opposite to the coupling wall (82), and is formed to have a U-shaped cross section orthogonal to the axial direction (L), and
at least one of the pair of guide walls (81) preferably includes a deformable portion (811) that is elastically deformable from a state in which a width of the opening (83) is smaller than a diameter of the signal wire (5) to a state in which the width of the opening (83) is equal to or larger than the diameter of the signal wire (5).

According to this configuration, by inserting the signal wire (5) into the holding member (8) from the opening (83), the signal wire (5) can be easily held by the holding member (8), and after the signal wire (5) is held by the holding member (8), the signal wire (5) can be prevented from coming off the holding member (8). Therefore, it is easy to improve the assemblability at the time of manufacturing the vehicle drive transmission device (100).

The holding member (8) preferably further includes lip portions (85) formed by curving or bending end portions on both sides in the axial direction (L) of each of the pair of guide walls (81), and
the lip portion (85) disposed on one of the pair of guide walls (81) and the lip portion (85) disposed on the other of the pair of guide walls (81) are preferably formed to be separated from each other.

According to this configuration, since the lip portion (85) makes it difficult for the signal wire (5) to come into contact with the end portions of the guide wall (81), it is easy to avoid damage to the signal wire (5).

Further, according to the present configuration, the strength of the holding member (8) is easily improved by the lip portion (85).

### Industrial Applicability

The technique according to the present disclosure can be used for a vehicle drive transmission device including an input member drivingly coupled to a driving force source, an output member drivingly coupled to a wheel, and a power transmission mechanism configured to transmit power between the input member and the output member.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle drive transmission device (100) comprising:
an input member (I) drivingly coupled to a driving force source (D);
an output member (O) drivingly coupled to a wheel (W); and
a power transmission mechanism (PT) configured to transmit power between the input member (I) and the output member (O), wherein
the power transmission mechanism (PT) includes
a first member (1) and a second member (2) disposed coaxially with each other, and
a meshing type engagement device (3) configured to perform engagement and engagement release between the first member (1) and the second member (2),
a direction along a reference axis (X1) that is an axis on which the first member (1) and the second member (2) are disposed is defined as an axial direction (L),
the engagement device (3) includes
a first engaged portion (31) provided at the first member (1),
a second engaged portion (32) provided at the second member (2),
an engagement member (33) rotatable about the reference axis (X1) and configured to change, by moving in the axial direction (L), between a first state in which the engagement member (33) is engaged with both of the first engaged portion (31) and the second engaged portion (32) and a second state in which engagement with at least one of the first engaged portion (31) and the second engaged portion (32) is released,
a connection member (34) that is engaged with the engagement member (33) in a state where relative rotation about the reference axis (X1) with respect to the engagement member (33) is allowed and relative movement in the axial direction (L) is restricted, and
a drive mechanism (35) configured to move the engagement member (33) in the axial direction (L) via the connection member (34) by driving the connection member (34) in the axial direction (L), and
a speed sensor (4) configured to detect a rotational speed of the engagement member (33) is attached to the connection member (34) so as to move in the axial direction (L) together with the connection member (34).

2. The vehicle drive transmission device according to claim 1, further comprising:
a case (CS) accommodating the power transmission mechanism;
a signal wire (5) extending from the speed sensor; and
a fixing member (7) disposed apart from the speed sensor and configured to fix the signal wire to the case.

3. The vehicle drive transmission device according to claim 2, further comprising:
a holding member (8) configured to hold the signal wire, wherein
the signal wire includes a curved portion (5a) that is curved between the speed sensor and the fixing member, and
the holding member includes a pair of guide walls (81) disposed so as to sandwich the curved portion from both sides in a direction (P) orthogonal to the axial direction.

4. The vehicle drive transmission device according to claim 3, wherein
the holding member further includes a coupling wall (82) coupling the pair of guide walls to each other, and an opening (83) formed between the pair of guide walls so as to open on a side opposite to the coupling wall, and is formed to have a U-shaped cross section orthogonal to the axial direction, and
at least one of the pair of guide walls includes a deformable portion (811) that is elastically deformable from a state where a width of the opening is smaller than a diameter of the signal wire to a state where the width of the opening is equal to or larger than the diameter of the signal wire.

5. The vehicle drive transmission device according to claim 3 or 4, wherein
the holding member further includes lip portions (85) formed by curving or bending end portions on both sides in the axial direction of each of the pair of guide walls, and
the lip portion disposed on one of the pair of guide walls and the lip portion disposed on the other of the pair of guide walls are formed to be separated from each other.
